# FASCICULE DE BREVET EUROPEEN

(11) **EP 0 967 461 B1**
(45) Date de publication et mention de la délivrance du brevet: **02.04.2003**
(21) Numéro de dépôt: 99401520.4
(22) Date de dépôt: 18.06.1999
(51) Int. Cl.: G01C 23/00, G02B 27/01

(54) **Dispositif optoélectronique d'assistance au pilotage d'une véhicule**
Optoelektronische Flugzeugsteuerungshilfevorrichtung
Optoelectronic vehicle flight control assistance device

(30) Priorité: 26.06.1998 FR 9808156
(43) Date de publication de la demande: 29.12.1999
(73) Titulaire: THALES AVIONICS S.A., 78141 Vélizy Villacoublay Cédex (FR); VDO Luftfahrtgeräte Werk GmbH, 60439 Frankfurt (DE)
(72) Inventeur: Aymeric, Bruno, Thomson-CSF Prop. Int. Dpt. Br., 94117 Arcueil Cedex (FR); Von Viebahn, Harro, Thomson-CSF Prop. Int. Dpt. B., 94117 Arcueil Cedex (FR)
(74) Mandataire: Beylot, Jacques

(56) Documents cités:
- FR-A- 2 733 061
- US-A- 5 357 263

## Description

La présente invention concerne un dispositif d'assistance au pilotage ou à la simulation du pilotage d'un véhicule se déplaçant dans un espace à trois dimensions tel qu'un aéronef.

Pour assister le pilote d'un aéronef, il est connu d'utiliser des dispositifs optoélectroniques consistant en des collimateurs ou des visualisations tête-haute présentant devant les yeux du pilote, en superposition avec la vue du monde extérieur, des informations graphiques et alphanumériques le renseignant à tout instant sur l'attitude de l'aéronef et la trajectoire suivie. C'est ainsi, qu'il est habituel, avec un collimateur, de présenter aux yeux du pilote :
- une ligne d'horizon artificiel graduée en cap, qui est mobile et se superpose avec l'horizon réel lorsqu'il est visible,
- un symbole avion fixe matérialisant la projection à l'infini de l'axe longitudinal de l'aéronef,
- un indicateur d'inclinaison latérale constitué d'un index solidaire en mouvement de la ligne d'horizon artificiel, se déplaçant en regard d'une échelle d'inclinaison latérale en arc de cercle qui est fixe, et
- un cercle ailé mobile restant parallèle au symbole avion et matérialisant la position de l'extrémité du vecteur vitesse de l'aéronef tracé avec pour origine le symbole avion fixe.

De tels dispositifs sont décrits par exemple dans les documents US-A-5 357 263 et FR-A-2 733 061.

La projection du symbole avion sur la ligne d'horizon artificiel donne le cap suivi, tandis que la hauteur relative du symbole avion par rapport à la ligne d'horizon artificielle donne l'assiette longitudinale ou l'angle de tangage de l'aéronef.

L'indicateur d'inclinaison latérale, souvent placé au dessus du symbole avion fixe, donne par la position relative de son index vis à vis de son échelle en arc de cercle une mesure de l'inclinaison latérale ou angle de roulis de l'aéronef.

La position du cercle ailé mobile donne une indication sur l'orientation instantanée de la trajectoire suivi par l'aéronef.

Lorsque l'on cherche à faire suivre par l'aéronef une trajectoire prédéterminée comme par exemple, une trajectoire d'approche d'une piste d'atterrissage élaborée par un système ILS (Instrument Landing System en langue anglo-saxonne), il est de plus en plus courant, avec les aéronefs équipés de collimateur, de fournir une aide au pilote consistant à afficher sur le collimateur une fenêtre de guidage. Le pilote doit alors maintenir le cercle ailé mobile du vecteur vitesse à l'intérieur de la fenêtre de guidage par des manoeuvres de pilotage adéquates, pour être assuré de suivre la trajectoire convenue. Au cours d'un suivi de trajectoire à l'aide d'une fenêtre de guidage, toute l'attention du pilote est alors accaparée sur le collimateur par le cercle ailé mobile du vecteur vitesse et par la fenêtre de guidage de sorte que l'information sur l'angle de roulis donnée par l'indicateur d'inclinaison latérale lui échappe peu ou prou alors que cette information est importante pour le pilotage puisque l'annulation de l'angle de roulis garantit le maintien à court terme d'une trajectoire rectiligne.

Dans la pratique, dans une phase d'approche et d'atterrissage, la fenêtre de guidage et le cercle ailé mobile du vecteur vitesse sont proches de la ligne d'horizon, si bien que le pilote a tendance à se référer à la pente de la ligne d'horizon artificiel pour apprécier l'angle de roulis mais c'est une manière de faire assez imprécise surtout par faible visibilité ou vent irrégulier.

La présente invention a pour but de présenter dans un collimateur une information d'angle de roulis ou de consigne d'angle de roulis qui reste toujours à proximité immédiate du cercle ailé mobile du vecteur vitesse et qui soit d'une bonne précision suffisante pour la phase d'évolution en cours.

Elle a pour objet un dispositif optoélectronique d'assistance au pilotage d'un véhicule se déplaçant dans un espace à trois dimensions pourvu d'une centrale de navigation déterminant, entre autres, l'assiette latérale du véhicule et le module et l'orientation du vecteur vitesse du véhicule, et d'un collimateur affichant un symbole avion fixe donnant une référence longitudinale du véhicule, une ligne d'horizon artificiel mobile par rapport au symbole avion donnant une référence d'assiette latérale et de pente nulle et un cercle ailé mobile indiquant la position de l'extrémité du vecteur vitesse instantanée du véhicule. Ce dispositif est remarquable en ce qu'il comporte des moyens d'affichage sur le collimateur d'un cercle ailé privé d'un secteur angulaire ayant une ouverture variable représentative de l'angle d'assiette latérale du véhicule ou d'un écart par rapport à une consigne d'angle d'assiette latérale.

Avantageusement, le secteur angulaire ouvert du cercle ailé présente un bord vertical fixe tourné vers le haut et se situe, sur le cercle ailé, du côté relevé du véhicule de manière à avoir une ouverture variant dans le même sens que la position d'un index d'indicateur d'assiette latérale lié à la ligne d'horizon artificielle et se déplaçant face à une échelle angulaire en arc de cercle fixe.

Avantageusement, l'ouverture du secteur angulaire ouvert du cercle ailé est limitée à 90°.

Avantageusement, la taille de l'ouverture du secteur angulaire ouvert du cercle ailé est proportionnelle à l'angle d'assiette latérale du véhicule ou à l'écart par rapport à la consigne d'angle d'assiette latérale, atteint une valeur de 90° pour un angle limite d'assiette latérale ou d'écart par rapport à la consigne d'angle d'assiette latérale de l'ordre de 10° et reste à 90° pour tout angle d'assiette latérale ou d'écart par rapport à la consigne d'angle d'assiette latérale supérieur à l'angle limite.

Avantageusement, l'ouverture du secteur angulaire ouvert du cercle ailé est mise en évidence au moyen de deux segments de droite radiaux prolongeant ses bords.

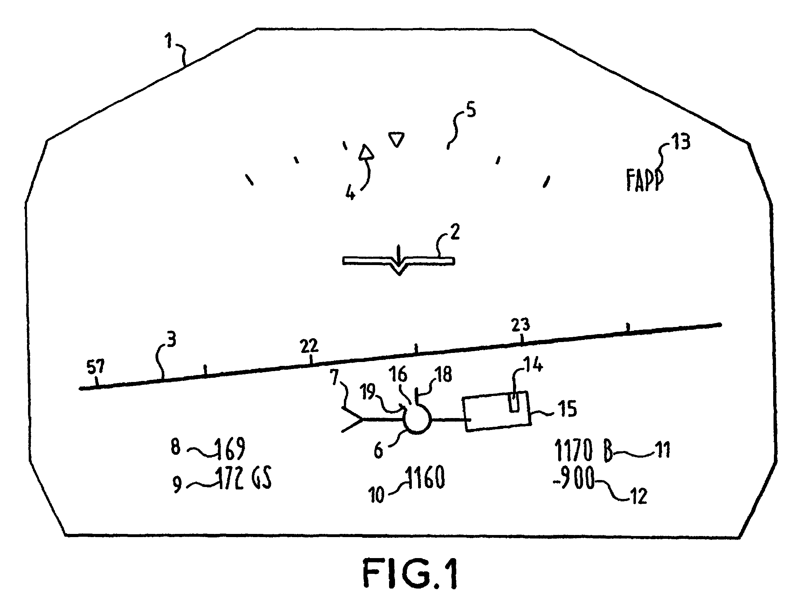

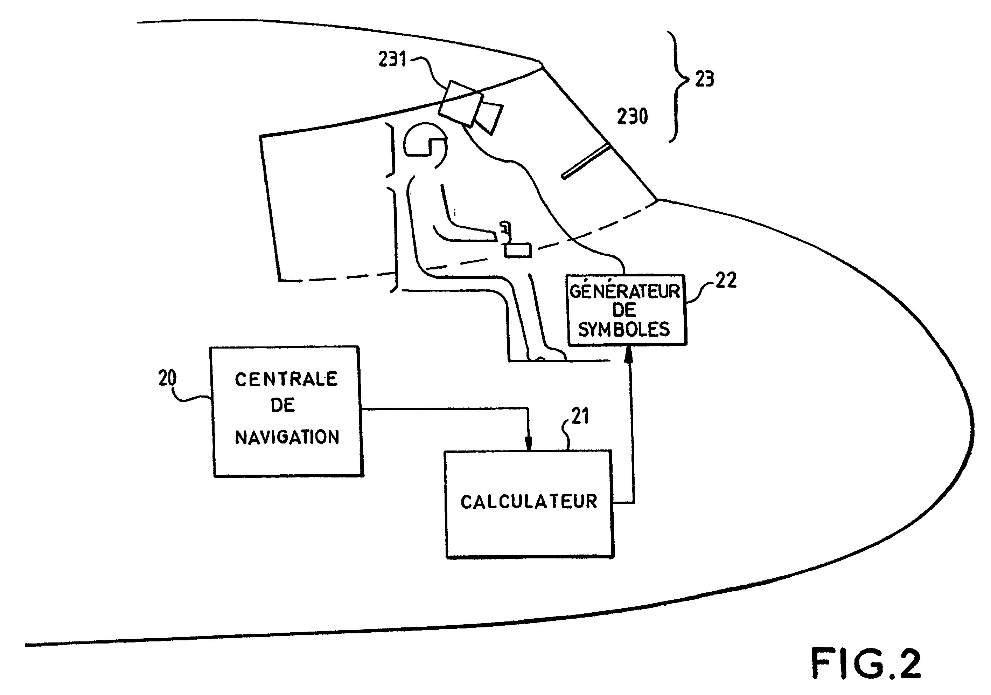

D'autres caractéristiques et avantages de l'invention ressortiront de la description ci-après d'un mode de réalisation donné à titre d'exemple. Cette description sera faite en regard du dessin dans lequel :
- une figure 1 est une représentation d'un écran de collimateur sur lequel apparaissent différents symboles graphiques dont celui affiché par un dispositif selon l'invention, et
- une figure 2 est un schéma illustrant une architecture générale d'un dispositif selon l'invention à bord d'un avion.

Un collimateur se présente sous la forme d'un écran transparent 1 au travers duquel le pilote regarde le paysage à l'extérieur d'un aéronef. Sur cet écran transparent 1 sont projetés différents symboles lumineux alphanumériques et graphiques destinés à faciliter le pilotage. A peu près au milieu du collimateur 1 est projetée de manière fixe, une maquette avion 2 qui matérialise l'axe de référence longitudinal du fuselage de l'aéronef. Une ligne d'horizon artificiel 3 mobile barre le collimateur 1. Elle est graduée avec une échelle de cap et se déplace sous les indications d'un système de navigation pour se confondre avec la ligne d'horizon réelle lorsqu'elle est visible. Au dessus de la maquette avion fixe 2 apparaît un indicateur d'assiette latérale avec un index 4 dont le côté inférieur est parallèle à la ligne d'horizon artificiel 3, et qui se déplace en regard d'une échelle angulaire fixe en arc de cercle 5. En plus de ces symboles graphiques permettant d'apprécier l'attitude de l'aéronef, un cercle ailé mobile 6, avec des ailes parallèles à celles de la maquette avion fixe, est projeté sur le collimateur 1. Il représente la localisation de l'extrémité du vecteur vitesse connue sous la dénomination anglo-saxonne de Flight Path Vector FPV et indique l'orientation de la trajectoire instantanée de l'aéronef. Il est accompagné d'un index 7 se déplaçant verticalement au droit de son aile gauche représentant l'énergie totale de l'aéronef et donnant par sa position verticale relative par rapport à l'aile du cercle ailé mobile une indication sur la variation positive ou négative de la vitesse sol instantanée de l'aéronef.

Ces principaux symboles graphiques sont accompagnés de symboles alphanumériques projetés dans la partie inférieure du collimateur 1 avec, sur la gauche, en 8 la vitesse de l'aéronef par rapport à l'air en noeuds, en 9 la vitesse de l'aéronef par rapport au sol en noeuds, au milieu, en 10 la hauteur de l'aéronef par rapport au sol mesurée en pieds et, sur la droite, en 11 l'altitude barométrique mesurée en pieds et en 12 la vitesse verticale.

L'affichage sur le collimateur 1 représenté à la figure 1 correspond à celui d'un aéronef dans une situation de phase final d'atterrissage sur une piste pourvue d'un système de guidage à l'atterrissage de type ILS. Cette situation est rappelée par l'indication alphanumérique FAPP 13 apparaissant dans le coin supérieur gauche du collimateur 1 qui signifie Final Approche. Dans ce cas, un symbole graphique de piste 14 est affiché pour aider le pilote à localiser la piste. Ce symbole graphique de piste 14 se confond par bonne visibilité avec le contour de la piste vue de l'aéronef. Il est accompagné d'une fenêtre de guidage 15 dans laquelle le pilote doit amener le cercle ailé mobile 6 du vecteur vitesse pour être assuré de suivre la trajectoire d'approche préconisée par l'instrumentation ILS.

Jusqu'à présent, le cercle ailé mobile du vecteur vitesse était formé d'un simple cercle ailé. Le pilote, par des manoeuvres de pilotage, pouvait facilement le déplacer pour l'amener dans une position voulue à l'intérieur d'une fenêtre de guidage mais avait du mal à le maintenir dans une position stable correspondant à une trajectoire rectiligne car cela exige un contrôle précis de l'assiette latérale qui doit être maintenue à l'horizontal. Le contrôle de cette assiette latérale imposait alors au pilote de porter son attention à la fois sur le cercle ailé du vecteur vitesse et sur l'indicateur d'assiette latérale ce qui était malcommode durant une manoeuvre d'approche et d'atterrissage car les deux symboles occupent des positions éloignées sur le collimateur. Pour éviter cet inconvénient et faciliter la tâche du pilote, on propose de modifier le symbole du cercle ailé du vecteur vitesse pour lui faire supporter, en plus de son information habituelle de repérage de l'extrémité du vecteur vitesse, une information sur l'assiette latérale du véhicule. Le symbole du cercle ailé du vecteur vitesse 6 apparaît alors sous la forme d'un cercle ailé privé d'un secteur angulaire 16 ayant une ouverture variable représentative de l'angle d'assiette latérale du véhicule.

Dans un but de compatibilité avec l'indicateur d'assiette latérale 4, 5, le secteur angulaire 16 à ouverture variable représentative de l'angle d'assiette latérale du véhicule est situé, dans le cercle ailé, du côté relevé du véhicule, avec son origine fixe placée au sommet du cercle ailé. Comme de fortes valeurs de roulis ne sont pas censées être atteintes pour contrôler la trajectoire dans une phase de guidage au moyen du cercle ailé du vecteur de vitesse, on limite l'information d'angle de roulis présentée sur le cercle ailé à une plage réduite par exemple +/-10° en donnant au secteur angulaire 16 une ouverture variant linéairement jusqu'à 90° pour un angle de roulis inférieur à 10°. Au delà, pour un angle de roulis supérieur à 10°, on maintient l'ouverture du secteur angulaire 16 à 90°

Pour une meilleure appréciation de l'ouverture du secteur angulaire 16, on souligne les bords de cette ouverture en les complétant par des segments de droite radiaux 18, 19.

La figure 2 illustre l'architecture générale d'un équipement installé à bord d'un avion pour afficher aux yeux du pilote les symboles graphiques de la figure 1. L'avion, dont on distingue la partie avant avec le poste de pilotage, est équipé d'une centrale de navigation 20 reliée par un calculateur 21 et un générateur de symboles 22 à un collimateur 23.

La centrale de navigation 20 fournit les indications habituelles sur l'attitude de l'avion et sa trajectoire. Ce peut être une centrale inertielle qui donne toutes les indications relatives au roulis, tangage et lacet ainsi que le module et l'orientation du vecteur vitesse ou une centrale d'attitude complétée par un dispositif de positionnement par satellite GPS fournissant le module et l'orientation du vecteur vitesse.

Le collimateur 23 comprend un écran transparent 230 qui est placé devant les yeux du pilote, en superposition avec le paysage, et sur lequel un dispositif de projection 231 vient afficher différents symboles alphanumériques et graphiques relatifs au pilotage dont ceux représentés à la figure 1.

Le dispositif de projection 231 est piloté par le générateur de symboles 22 qui reçoit des commandes de mise à jour du calculateur 21 relié à la centrale de navigation 20.

On a décrit ici, l'affichage sur le cercle ailé du vecteur vitesse d'une information sur l'assiette latérale de l'aéronef qui représente l'écart de l'angle d'assiette latérale de l'aéronef par rapport à l'horizontal. Mais il est bien évident que cette information pourrait se rapporter à une consigne sur l'assiette latérale de l'aéronef et représenter alors l'écart entre l'angle d'assiette latérale de l'aéronef et la consigne, cette consigne étant par exemple issue d'un directeur de vol.

## Revendications

1. Dispositif optoélectronique d'assistance au pilotage d'un véhicule se déplaçant dans un espace à frois dimensions pourvu d'une centrale de navigation (20) déterminant, entre autres, l'assiette latérale du véhicule et le module et l'orientation du vecteur vitesse du véhicule, et d'un collimateur (23) affichant un symbole avion fixe (2) donnant une référence longitudinale du véhicule, une ligne d'horizon artificiel (3) mobile par rapport au symbole avion (2) donnant une référence d'assiette latérale et de pente nulle et un cercle ailé mobile (6) indiquant la position de l'extrémité du vecteur vitesse instantanée du véhicule, **caractérisé en ce qu'**il comporte des moyens d'affichage sur le collimateur d'un cercle ailé (6) privé d'un secteur angulaire (16) ayant une ouverture variable représentative de l'angle d'assiette latérale du véhicule ou d'un écart par rapport à une consigne d'angle d'assiette latérale.

2. Dispositif selon la revendication 1, **caractérisé en ce que** le secteur angulaire ouvert (16) du cercle ailé (6) présente un bord vertical fixe (18) tourné vers le haut et se situe, sur le cercle ailé, du côté relevé du véhicule.

3. Dispositif selon la revendication 1, **caractérisé en ce que** l'ouverture du secteur angulaire ouvert (16) du cercle ailé (6) est limitée à 90°.

4. Dispositif selon la revendication 1, **caractérisé en ce que** la taille de l'ouverture du secteur angulaire ouvert (16) du cercle ailé (6) est proportionnelle à l'angle d'assiette latérale du véhicule ou à l'écart par rapport à la consigne d'angle d'assiette latérale, atteint une valeur de 90° pour un angle limite d'assiette latérale ou d'écart par rapport à une consigne d'angle d'assiette latérale de l'ordre de 10° et reste à 90° pour tout angle d'assiette latérale ou écart par rapport à une consigne d'angle d'assiette latérale supérieur à l'angle limite.

5. Dispositif selon la revendication 1, **caractérisé en ce que** l'ouverture du secteur angulaire ouvert (16) du cercle ailé (6) est mise en évidence au moyen de deux segments de droite radiaux (18, 19) prolongeant ses bords.

## Patentansprüche

1. Optoelektronische Vorrichtung zur Steuerung eines sich in einem dreidimensionalen Raum bewegenden Fahrzeugs, das eine Navigationszentrale (20) zur Bestimmung unter anderen der Seiten-Trimmlage des Fahrzeugs und der Größe und Richtung des Geschwindigkeitsvektors des Fahrzeugs sowie einen Kollimator (23) besitzt, der ein ortsfestes Flugzeugsymbol (2), das eine Referenz für die Seitentrimmlage des Fahrzeugs liefert, eine künstliche Horizontlinie (3), die bezüglich des Flugzeugsymbols (2) beweglich ist, und einen Bezugswert für die Seiten-Trimmlage des Werts null sowie einen mit Flügeln versehenen beweglichen Kreis (6) anzeigt, der die Lage des Endes des aktuellen Geschwindigkeitsvektors des Fahrzeugs angibt, **dadurch gekennzeichnet, daß** die Vorrichtung Mittel besitzt, um auf dem Kollimator einen mit Flügeln versehenen Kreis (6) anzuzeigen, dem ein Winkelsektor (16) fehlt, sodaß er eine vom Seitentrimmwinkel des Fahrzeugs oder von einer Abweichung des Trimmwinkels von einem Sollwert abhängige variable Öffnung hat.

2. Vorrichtung nach Anspruch 1, **dadurch gekennzeichnet, daß** der offene Winkelsektor (16) des mit Flügeln versehenen Kreises (6) einen festen vertikalen Rand (18) besitzt, der nach oben zeigt und sich an dem mit Flügeln versehenen Kreis an der höheren Seite des Fahrzeugs befindet.

3. Vorrichtung nach Anspruch 1, **dadurch gekennzeichnet, daß** die Öffnung (16) des offenen Winkelsektors des mit Flügeln versehenen Kreises (6) sich über maximal 90° erstreckt.

4. Vorrichtung nach Anspruch 1, **dadurch gekennzeichnet, daß** die Größe der Öffnung des offenen Winkelsektors (16) des mit Flügeln versehenen Kreises (6) zum Seitentrimmwinkel des Fahrzeugs oder zum Abstand bezüglich des Sollwerts des Seitentrimmwinkels proportional ist, für einen Grenzwert des Seitentrimmwinkels oder des Abstands bezüglich eines Bezugswerts des Seitentrimmwinkels von etwa 10° einen Wert von 90° erreicht und für Seitentrimmwinkel oder Abstände bezüglich eines Sollwerts des Seitentrimmwinkels jenseits dieses Grenzwerts bei 90° bleibt.

5. Vorrichtung nach Anspruch 1, **dadurch gekennzeichnet, daß** die Öffnung des offenen Winkelsektors (16) des mit Flügeln versehenen Kreises (6) mithilfe von zwei radialen Geradensegmenten (18, 19) markiert ist, die dessen Ränder verlängern.

## Claims

1. Optoelectronic device for assisting the piloting of a vehicle moving in a three-dimensional space and provided with a navigation unit (20) determining, *inter alia*, the lateral attitude of the vehicle and the modulus and the orientation of the velocity vector of the vehicle, and with a collimator (23) displaying a fixed aircraft symbol (2) giving a longitudinal reference of the vehicle, an artificial horizon line (3) which can be moved with respect to the aircraft symbol (2) giving a lateral attitude and zero slope reference and a moveable winged circle (6) indicating the position of the end of the instantaneous velocity vector of the vehicle, **characterized in that** it comprises means of displaying, on the collimator, a winged circle (6) lacking an angular sector (16) having a variable opening representative of the lateral attitude angle of the vehicle or of a difference with respect to a lateral attitude angle reference value.

2. Device according to Claim 1, **characterized in that** the open angular sector (16) of the winged circle (6) has a fixed vertical edge (18) turned upwards and is located, on the winged circle, on the raised side of the vehicle.

3. Device according to Claim 1, **characterized in that** the opening of the open angular sector (16) of the winged circle (6) is limited to 90°.

4. Device according to Claim 1, **characterized in that** the size of the opening of the open angular sector (16) of the winged circle (6) is proportional to the lateral attitude angle of the vehicle or to the difference with respect to the lateral attitude angle reference value and reaches a value of 90° for a limiting lateral attitude angle or difference with respect to a lateral attitude angle reference value of about 10° and remains at 90° for any lateral attitude angle or difference with respect to a lateral attitude angle reference value greater than the limiting angle.

5. Device according to Claim 1, **characterized in that** the opening of the open angular sector (16) of the winged circle (6) is highlighted by means of two radial segments (18, 19) of a straight line extending its edges.
